# EUROPEAN PATENT SPECIFICATION

(11) **EP 3 158 896 B1**
(45) Date of publication and mention of the grant of the patent: **16.10.2019**
(21) Application number: 15809831.9
(22) Date of filing: 04.06.2015
(51) Int. Cl.: A47J 19/02, A47J 19/06, A47J 43/07

(54) **JUICE-EXTRACTION MODULE FOR JUICER**
SAFTPRESSMODUL FÜR ENTSAFTER
MODULE D'EXTRACTION DE JUS POUR CENTRIFUGEUSE

(30) Priority: 19.06.2014 KR 20140075091; 19.05.2015 KR 20150069431
(43) Date of publication of application: 26.04.2017
(73) Proprietor: Kim, Jae-Won, Gyeongsangnam-do 51015 (KR)
(72) Inventor: KIM, Young Ki, Gimhae-si ,Gyeongsangnam-do 51006 (KR); KIM, Jae Won, Gimahae-si, Gyeongsangnam-do 51015 (KR)
(74) Representative: Krauns, Christian
(86) International application number: PCT/KR2015/005609
(87) International publication number: WO 2015/194775

(56) References cited:
- WO-A1-2007/033577
- JP-U- S5 174 586
- JP-U- S5 244 286
- KR-A- 20110 007 449
- KR-B1- 100 755 440
- KR-U- 20100 008 882
- KR-U- 20100 008 882

## Description

### TECHNICAL FIELD

The present invention relates to a juice squeezing module for a juicer, and more particularly, to a juice squeezing module for a juicer that is detachably coupled to a driving body of the juicer to squeeze juice from vegetables or fruits through a rotating screw.

### BACKGROUND OF THE INVENTION

With the high interest in wellbeing and organic products, recently, many peoples drink the juice extracted from vegetables, fruits and grains in their houses. Accordingly, many studies and developments on juicers used in houses have been continously made.

The juicer compresses vegetables or fruits put between a screw and a screen drum to produce juice therefrom. A general juicer includes a driving body having a driving motor embedded thereinto and a juice squeezing module having a screw and a screen drum disposed at the inside thereof and a material injection hole formed on the top portion thereof, and the driving body and the juice squeezing module are coupled to each other. As one of conventional juicers, Korean Patent No.10-1282315 discloses a juicer with a screw coupled horizontally thereto, and as another conventional juicer, Korean Patent No.10-0755440 discloses a juicer with a screw coupled vertically thereto.

The conventional juicer as disclosed in Korean Patent No.10-0755440 will be explained with reference to FIG.1, and as shown in FIG.1, the juicer includes: a cap 110a having an injection hole 111a and a rotary shaft hole 112a formed at the center of the interior thereof; a juice squeezing drum 120a disposed on the underside of the cap 110a and having a screen drum guide projection 121a formed on the underside periphery thereof, and a remnant discharging hole 122a and a juice discharging hole 123a extended outward from the lower end periphery thereof; a juice squeezing screw 130a having an upper rotary shaft 131a formed on the top portion thereof in such a manner as to be rotatably inserted into the rotary shaft hole 112a, a plurality of screw spiral lines 132a formed on the outer peripheral surface thereof, and a lower rotary shaft 134a formed at the center of the lower portion thereof; a screen drum 140a disposed inside the juice squeezing drum 120a and having a screen structure 141a as an external wall thereof and a plurality of wall blades 142a formed on the inner peripheral surface thereof; and a driving body 160a having a driving motor (not shown) mounted at the inside thereof in such a manner as to be connected to the lower rotary shaft 134a of the juice squeezing screw 130a to rotate the juice squeezing screw 130a.

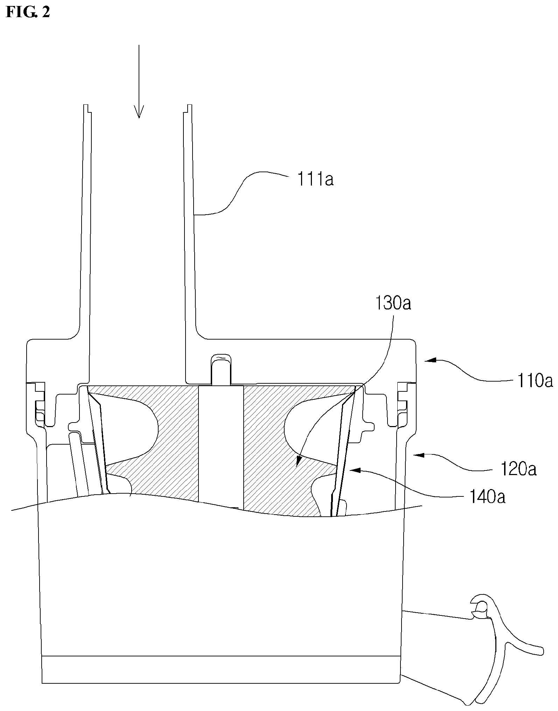

On the other hand, as shown in FIG.2, the injection hole 111a into which extraction materials are injected is formed on the top end of the cap 110a, so that the extraction materials are linearly injected in a top-down manner.

At this time, a user's hand (especially, a child's hand) may be put deeply into the injection hole 111a and get caught by the rotating juice squeezing screw 130a, thus hurting. Accordingly, the conventional juicer has a limit in the design so that the sectional area of the injection hole 111a cannot become large. Since the sectional area of the injection hole 111a is small, the extraction materials should be inconveniently cut to small pieces.

Further, the conventional juicer is provided with a pressing rod (not shown) for pressing the extraction materials into the injection hole 111a, but in some cases, the extraction materials push into the injection hole 111a by using other tools (for example, chopsticks and the like). At this time, the inserted object comes into contact with the rotating juice squeezing screw to cause the user to hurt, and in this case, the juicer may be broken or malfunctioned.

The WO 2007/033577 A1 discloses a cover-reversible juice extractor for the whole fruit comprising a base, a device body arranged on the base and a top cover covering the device body. A feed pipe is arranged vertically in the top cover. There are a blade and a filter screen in the device body. The top cover and the device body are rotatablely hinge-joined.

### SUMMARY OF THE INVENTION

Accordingly, the present invention has been made in view of the above-mentioned problems occurring in the prior art, and it is an object of the present invention to provide a juice squeezing module for a juicer that prevents a user's hand from being inserted deeply thereinto through an injection hole.

It is another object of the present invention to provide a juice squeezing module for a juicer that allows the sectional area of an injection hole to become large, while preventing a user's hand from being inserted deeply thereinto through the injection hole, thus removing the inconvenience that causes extraction materials to cut to small pieces.

It is yet another object of the present invention to provide a juice squeezing module for a juicer that is provided with a dedicated pressing rod, thus preventing the occurrence of accidents like failure or breakage.

It is still another object of the present invention to provide a juice squeezing module for a juicer that conducts the injection process of extraction materials in a simpler manner.

To accomplish the above objects, according to a first aspect of the present invention, there is provided a juice squeezing module for a juicer, including: a juice squeezing drum open on the top surface thereof and having a juice discharging hole and a remnant discharging hole formed on the lower end periphery thereof; a juice squeezing screw rotatably mounted at the inside of the juice squeezing drum and having screw spiral lines formed on the outer peripheral surface thereof; a screen drum mounted at the inside of the juice squeezing drum in such a manner as to surround the juice squeezing screw; and a cap adapted to cover the top surface of the juice squeezing drum and having an injection tube protrudingly extended upward from a portion of the top thereof, the injection tube having an injection hole formed on the side surface thereof to insert extraction materials thereinto.

According to the present invention, desirably, the cap further has a hopper disposed on the side surface of the injection tube in such a manner as to support the outer periphery of the injection hole, and the hopper includes an upper external wall protruding laterally by a given length from the upper periphery of the injection hole and a bottom surface extended horizontally from the lower periphery of the injection hole in such a manner as to be longer than the upper external wall.

According to the present invention, desirably, the bottom surface of the hopper is inclined downward toward the injection hole.

According to the present invention, desirably, the height of the injection hole is 45 mm or under, the width of the injection hole is in the range of 60 to 100 mm, and the inside diameter of the short axis of the injection tube is 40 mm or under.

According to the present invention, desirably, the cap includes a base adapted to cover the top surface of the juice squeezing drum and the injection tube protrudingly extended upward from one side of the base, and the distance from the underside of the base to the bottom periphery of the injection hole is 100 mm or more, while the protruding length of the upper external wall is being in the range of 20 to 40 mm.

According to the present invention, desirably, the juice squeezing module further includes a pressing rod adapted to be inserted into an insertion hole formed on the top portion of the injection tube to press the extraction materials thereagainst through up and down movement.

According to the present invention, desirably, the injection tube comprises guide protrusions formed on the inner peripheral surface thereof to prevent a user's hand from being inserted deeply thereinto.

According to the present invention, desirably, the juice squeezing module further includes a mounting member open on the top and underside thereof and having a side opening formed on one side thereof in such a manner as to cut vertically on at least a portion thereof and a fitting portion formed on one side of the side opening in such a manner as to be detachably coupled to the outer peripheral surface of the injection tube, whereby the escape of the pressing rod is avoided by means of the mounting member, and the pressing rod moves up and down in the injection tube to press the injected extraction materials thereagainst.

According to the present invention, desirably, the juice squeezing module further includes escape prevention means for preventing the pressing rod from being escaped from the mounting member.

According to the present invention, desirably, the escape prevention means includes: a coupling portion formed on the upper portion of the mounting member in such a manner as to be detachably coupled to the outer peripheral surface of the injection tube and having a round projection formed on the inner peripheral surface of the top end thereof; and a stepped projection formed on the outer peripheral surface of the pressing rod in such a manner as to be locked onto the round projection.

According to the present invention, desirably, the juice squeezing module further includes coupling sensing means for sensing whether the juice squeezing drum to which the mounting member is coupled is mounted on a driving body having driving force generating means providing a driving force to the juice squeezing screw and a driving shaft connected to the driving force generating means to allow the driving force generating means to become in a state of being driven.

According to the present invention, desirably, the coupling sensing means includes: signal generating means disposed on one side of the mounting member to generate a signal; and a sensor disposed on the driving body to sense the signal.

According to the present invention, desirably, the coupling sensing means includes: a protrusion formed on one side of the mounting member; and a micro switch disposed on the driving body in such a manner as to be operated by the protrusion.

According to the present invention, desirably, the pressing rod has a cutter formed on one side thereof to cut the injected extraction materials.

To accomplish the above objects, according to another aspect of the present invention, there is provided a juice squeezing module for a juicer, including: a juice squeezing drum having an internal space formed therein, a juice discharging hole formed on one side of the lower portion thereof, an injection tube formed on one side of the upper portion thereof in such a manner as to communicate with the internal space thereof, and a remnant discharging hole formed on one side thereof; a juice squeezing screw rotatably mounted at the inside of the juice squeezing drum and having screw spiral lines formed on the outer peripheral surface thereof; and a screen drum mounted at the inside of the juice squeezing drum in such a manner as to surround the juice squeezing screw, wherein the injection tube includes an injection hole formed on the side surface thereof to inject extraction materials thereinto and a hopper adapted to surround the injection hole, the hopper having an upper external wall protruding laterally by a given length from the upper periphery of the injection hole and a bottom surface extended horizontally from the lower periphery of the injection hole in such a manner as to be longer than the upper external wall.

### BRIEF DESCRIPTION OF THE DRAWINGS

The above and other objects, features and advantages of the present invention will be apparent from the following detailed description of the preferred embodiments of the invention in conjunction with the accompanying drawings, in which:

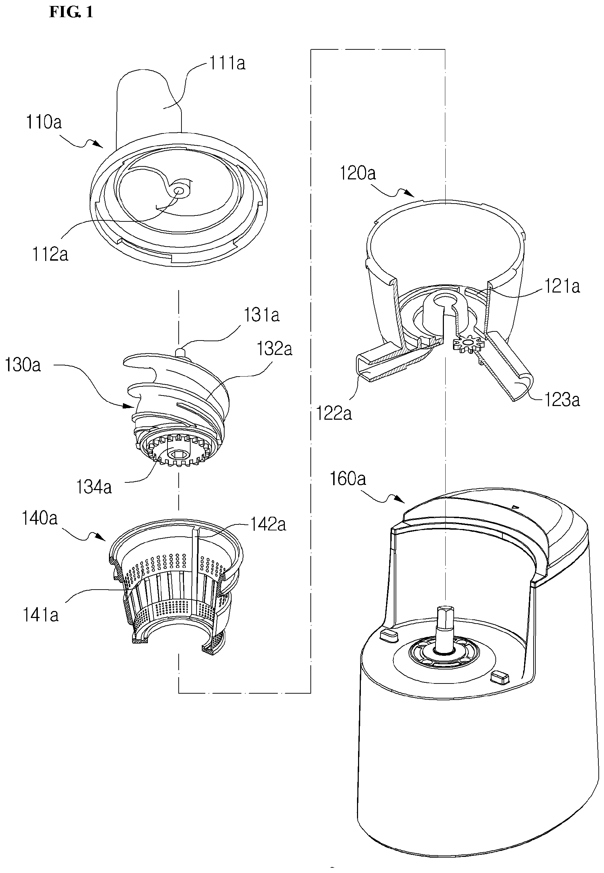

FIG.1 is an exploded perspective view showing a conventional juicer;
FIG.2 is a partially sectional view showing a juice squeezing module of FIG.1;
FIG.3 is an exploded perspective view showing a cap and a pressing rod in a juice squeezing module for a juicer according to a first embodiment of the present invention;
FIGS.4a and 4b are partially sectional views showing the injection hole in the conventional juicer and the injection hole according to the present invention;
FIG.5 is an exploded perspective view showing a cap, a mounting member, and a pressing rod in a juice squeezing module for a juicer according to a second embodiment of the present invention;
FIG.6 is a sectional view showing the fastening state wherein the pressing rod of FIG.5 is located at the uppermost end;
FIG.7 is a sectional view showing the fastening state wherein the pressing rod of FIG.5 is located at the lowermost end;
FIG.8 is a perspective view showing the pressing rod having a cutter formed thereon according to the present invention;
FIG.9 is a perspective view showing a cap and a pressing rod in a juice squeezing module for a juicer according to a third embodiment of the present invention;
FIG. 10 is a sectional view showing the cap and the pressing rod of FIG.9; and
FIG.11 is an exploded perspective view showing a juice squeezing module for a juicer according to a fourth embodiment of the present invention.

### DETAILED DESCRIPTION OF THE INVENTION

Hereinafter, an explanation on a juice squeezing module for a juicer according to the present invention will be in detail given with reference to the attached drawing.

While the present invention will be described with reference to the particular illustrative embodiments, it is not to be restricted by the embodiments. It is to be appreciated that those skilled in the art can change or modify the embodiments without departing from the scope and spirit of the present invention.

Further, the component's width, length, thickness, etc. are exaggerated for the clearness and convenience of the description. The above-mentioned terms are defined in consideration of the functions in the present invention, which may be varied in accordance with a user or operator's intention or practice, and accordingly, the definitions of the terms should be based on the contents of the specification. Therefore, they should be defined on the basis of the whole scope of the present invention.

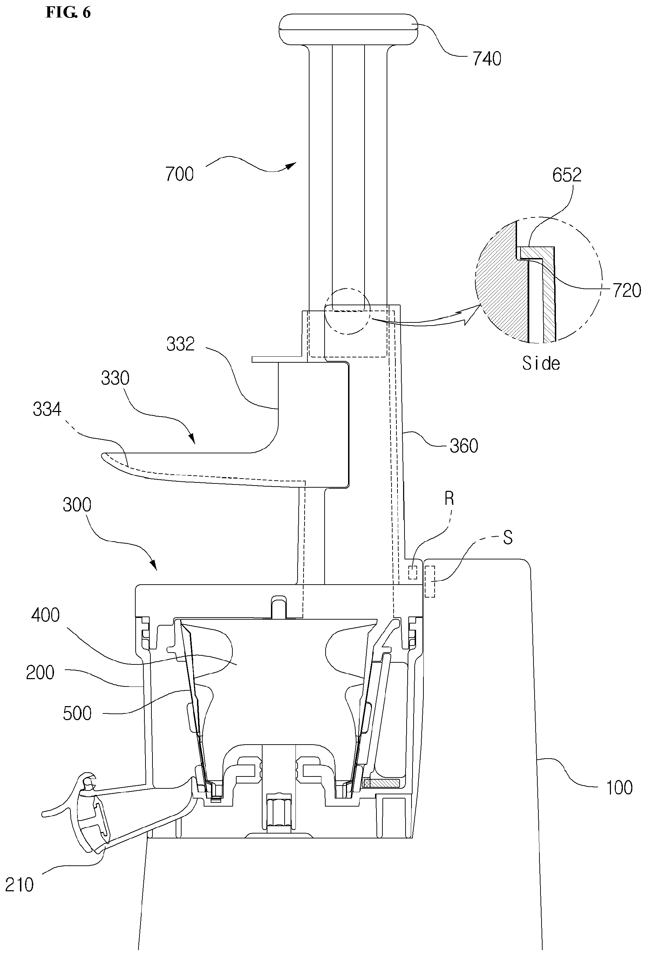

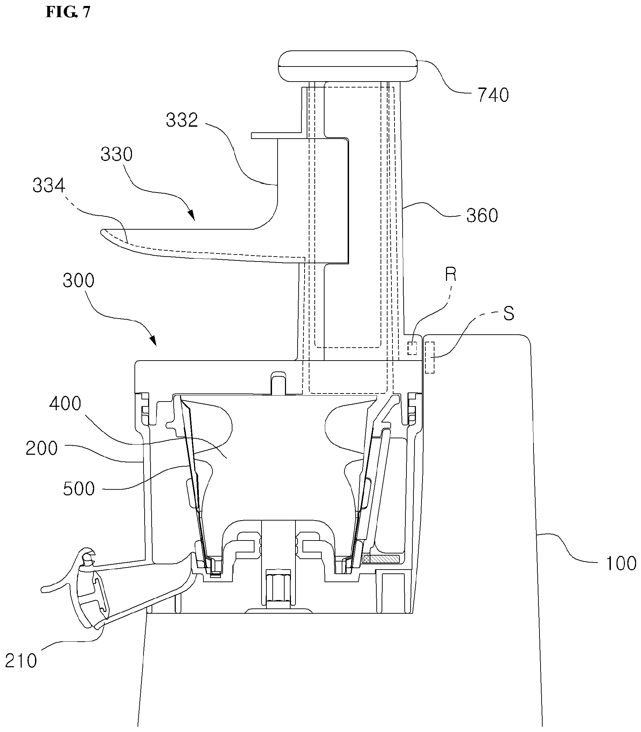

As shown in FIGS.6 and 7, a juice squeezing module for a juicer according to a first embodiment of the present invention is coupled to a driving body 100 and includes a juice squeezing drum 200, a cap 300, a juice squeezing screw 400 and a screen drum 500.

In this case, the driving body 100 has a general driving motor (not shown) as driving force generating means mounted at the inside thereof to provide a rotary driving force to the juice squeezing screw 400. The driving motor is a part for providing the driving force by which the juice squeezing screw 400 rotates at a low speed and has a driving shaft protruding upward therefrom in such a manner as to be connected to the underside of the juice squeezing screw 400.

The juice squeezing drum 200 is open on the top surface thereof in such a manner as to be mounted on the driving body 100 and accommodates the juice squeezing screw 400 and the screen drum 500 thereinto.

The juice squeezing drum 200 has a juice discharging hole 210 and a remnant discharging hole (not shown) formed spaced apart from each other on the lower end periphery thereof.

The juice squeezing screw 400 is rotatably mounted at the inside of the juice squeezing drum 200 and has a plurality of screw spiral lines formed on the outer peripheral surface thereof and a power connector disposed on the underside thereof in such a manner as to be connected to the driving shaft.

The screen drum 500 is mounted at the inside of the juice squeezing drum 200 and has a screen structure as the outer peripheral wall thereof to allow juice to be passed therethrough.

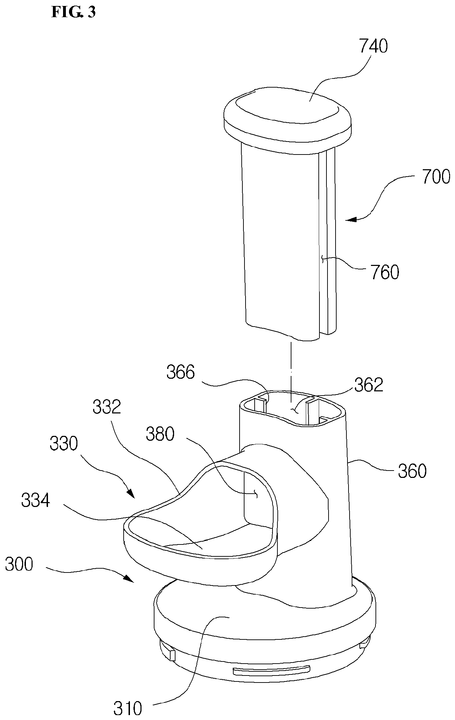

Hereinafter, the juice squeezing module for the juicer according to the first embodiment of the present invention will be in detail explained with reference to FIGS.3 to 8.

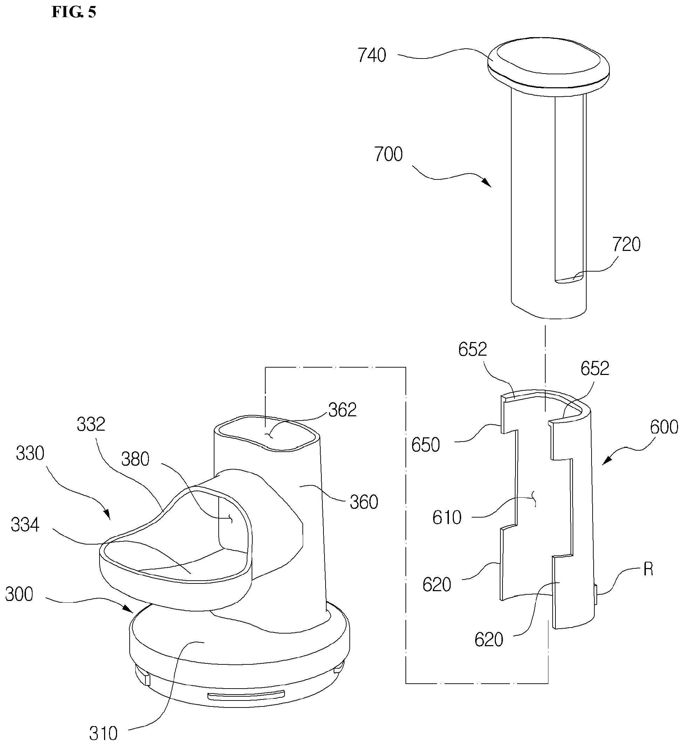

Referring first to FIGS.3 and 5, the cap 300 includes a base 310 adapted to cover the top surface of the juice squeezing drum 200 and an injection tube 360 protrudingly extended upward from the top portion of the base 310 and having a passage formed at the inside thereof in such a manner as to pass the base 310 therethrough. The injection tube 360 provides a passage through which the extraction materials are injected into the juice squeezing drum 200.

The base 310 desirably has a round shape so that it can be coupled to and separated from the juice squeezing drum 200 through rotation, but may have other shapes freely. Further, the base 310 has a plurality of locking stepped portions equally spaced apart from each other along the lower outer peripheral surface thereof, and the juice squeezing drum 200 has a plurality of locking protrusions formed on the top end periphery thereof in such a manner as to be coupled to the locking stepped portions, so that the base 310 and the juice squeezing drum 200 can be coupled to and separated from each other by means of their cooperative rotation.

An injection hole 380 is formed on the side surface of the injection tube 360 in such a manner as to communicate with the interior of the injection tube 360, into which the extraction materials are injected. That is, the injection hole 380 is formed on the side surface of the upper part of the injection tube 360. The injection hole 380, which is the hole into which the extraction materials are injected, is formed by opening a portion of the side surface of the injection tube 360. As shown, the injection hole 380 has a generally square shape, but if necessary, it may have various shapes. Further, the size of the injection hole 380 may be freely formed according to needs.

A hopper 330 is disposed on a given area of the outer peripheral surface of the injection tube 360 in such a manner as to surround the injection hole 380. The formation of the hopper 330 prevents the extraction materials from dropping down when they are injected into the injection hole 380. The hopper 330 includes an external wall 332 adapted to surround the edge of the injection hole 380 and a bottom surface 334 extended horizontally to the bottom of the injection hole 380.Desirably, the upper external wall 332 and the bottom surface 334 are formed unitarily with each other. Further, the bottom surface 334 is somewhat inclined downward toward the injection hole 380 so as to improve the injection efficiency of the extraction materials into the injection hole 380.

On the other hand, the injection tube 360 has an insertion hole 362 formed on the top end thereof, into which the pressing rod 700 is inserted, and the insertion hole 362 communicates with the internal passage of the injection tube 360.

Further, as shown in FIG.3, guide protrusions 366 are formed on the insertion hole 362 of the injection tube 360 so as to more accurately induce the up and down movement of the pressing rod 700 and to prevent a user's hand from being inserted into the injection tube 360. The guide protrusions 366 are formed on the inner peripheral surface of the insertion hole 362 of the injection tube 360, and desirably, they are formed on the inner peripheral surface of the entrance portion of the insertion hole 362. One or more guide protrusions 366 are formed on the inner peripheral surface of the insertion hole 362 of the injection tube 360, and in this case, the number of guide protrusions and the protruding heights and lengths may be appropriately adjusted to prevent the user's hand from being inserted deeply into the injection tube 360.

The pressing rod 700, which is inserted into the insertion hole 362, has guide grooves 760 formed vertically on the outer peripheral surface thereof to insert the guide protrusions 366 thereinto.

As shown in FIG.5, a mounting member 600 is coupled to the external surface of the injection tube 360. As shown, the pressing rod 700 whose escape is prevented by means of the mounting member 600 is inserted into the insertion hole 362 of the injection tube 360. This will be in detail explained later.

The mounting member 600 has a sectional shape corresponding to the sectional shape of the injection tube 360 so that it can be brought into close contact with the outer peripheral surface of the injection tube 360, and for example, the mounting member 600 has a generally semi-circular or semi-oval shape. Further, the mounting member 600 is open on the top and underside thereof and cut vertically on one side surface thereof. The mounting member 600 has a side opening 610 formed on one side thereof and a coupling portion 650 and a fitting portion 620 having given elasticity formed on the upper and lower portions thereof

The coupling portion 650 and the fitting portion 620 have an arch shape protruding from one side of the side opening 610 so as to have the given elasticity, and they are brought into close contact with the outer peripheral surface of the injection tube 360 to support the mounting member 600 thereagainst.

The pressing rod 700 is inserted into the insertion hole 362 formed on the top end of the injection tube 360 and serves to press the extraction materials thereagainst through the up and down movement. The pressing rod 700 forms a pair with the mounting member 600.

The pressing rod 700 has a circular shaped handle 740 formed on the top end thereof to provide easy holding, and the handle 740 desirably has a larger diameter than the insertion hole 362.

On the other hand, the juice squeezing module according to the present invention includes escape prevention means for preventing the pressing rod 700 from being unexpectedly escaped from the mounting member 600. For example, the escape prevention means includes a round projection 652 and a stepped projection 720. The round projection 652 protrudes from the top end periphery of the coupling portion 650 toward the inside of the mounting member 600, and the stepped protrusion 720 is formed on a portion of the outer peripheral surface of the pressing rod 700 in such a manner as to be locked onto the round projection 652. At this time, if the stepped projection 720 is formed on the lower portion of the pressing rod 700, the width of the up and down movement of the pressing rod 700 can be maximized.

If the pressing rod 700 moves up to its maximum height, accordingly, the stepped projection 720 is locked onto the round projection 652 and does not move up anymore, thus preventing the pressing rod 700 from being escaped from the mounting member 600.

On the other hand, the juice squeezing module according to the present invention includes coupling sensing means for generating a signal by which the motor of the driving body 100 can be in a state of being driven if the juice squeezing drum 200 to which the mounting member 600 is coupled is mounted on the driving body 100. The coupling sensing means serves as a safety device and senses whether the juice squeezing drum 200 to which the cap 300 is coupled in the state where the mounting member 600 to which the pressing rod 700 is coupled is coupled to the cap 300 is mounted well on the driving body 100, thus allowing the driving motor to be in a state of being driven. Accordingly, if the pressing rod 700 is not coupled, the driving motor is not driven.

For example, the coupling sensing means includes a magnetic material R for generating a signal and a sensor S for sensing the signal. The magnetic material R is mounted on one side of the mounting member 600, and the sensor S is mounted on the driving body 100. The range of the magnetic force of the magnetic material R is desirably limited within a short distance where the magnetic force is sensible only when the magnetic material R is close to the sensor S.

If the magnetic material R is close to the sensor S to allow the magnetic force of the magnetic material R to be sensed by the sensor S, the mounting member 600 and the pressing rod 700 are coupled well to the injection tube 360, and also, the cap 300 is accurately coupled to the juice squeezing drum 200. This means the juice squeezing drum 200 is mounted correctly on the driving body 100.

According to another example of the coupling sensing means, the coupling sensing means includes a protrusion (not shown) and a micro switch (not shown). For example, the protrusion is mounted on one side of the mounting member 600, and the micro switch is mounted on the driving body 100. If the mounting member 600 is coupled, accordingly, the protrusion presses the micro switch to allow the driving motor to be in a state of being driven.

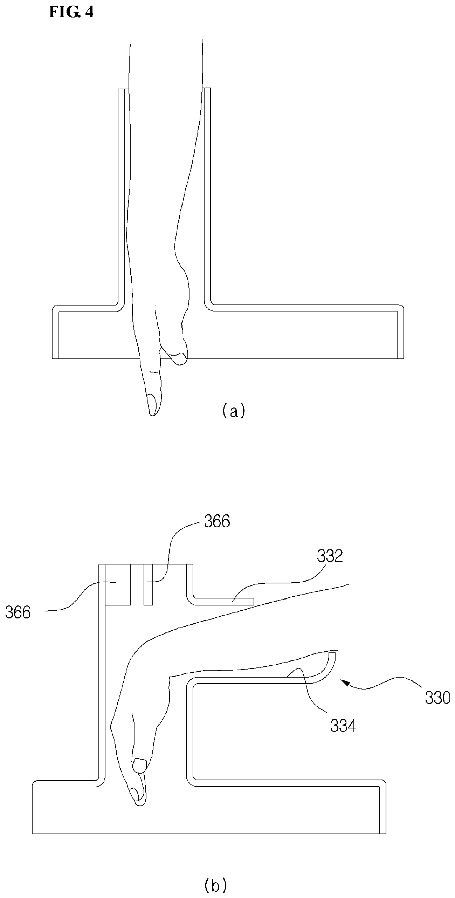

Under the above-mentioned configuration, the juice squeezing module according to the present invention adopts a side injection way for the extraction materials, thus preventing the user's hand from entering the interior of the juice squeezing drum 200. That is, as shown in FIG.4a, the injection hole in the conventional juicer is vertically formed, so that the user's hand, especially, a child's hand may be put deeply into the juice squeezing drum to cause safety accidents. However, as shown in FIG.4b, the juice squeezing module according to the present invention adopts a side injection way for the extraction materials, so that as the user's hand should pass along a bent passage, his or her joint is bent, thus preventing his or her hand from being inserted deeply into the injection hole to avoid safety accidents. Particularly, the longer the protruding length of the upper external wall of the hopper formed around the injection hole of the injection tube becomes, the harder the insertion of the user's hand into the injection tube becomes.

Under the above-mentioned configuration, hereinafter, an operation of the juice squeezing module according to the first embodiment of the present invention will be explained.

First, the operation relation will be explained with reference to FIG.3.

First of all, the juice squeezing screw 400 and the screen drum 500 are coupled to the juice squeezing drum 200. Next, the juice squeezing drum 200 is mounted on the driving body 100, and the cap 300 and the juice squeezing drum 200 are fastened to each other. Otherwise, the juice squeezing screw 400, the screen drum 500 and the cap 300 are coupled to the juice squeezing drum 200, and after that, the juice squeezing drum 200 is mounted on the driving body 100. While the guide grooves 760 of the pressing rod 700 are being coupled to the guide protrusions 366 of the injection tube 360, the pressing rod 700 is fitted to the injection tube 360. In this state, if the driving body 100 is activated, the juice squeezing screw 400 rotates and gets ready to perform a juice squeezing operation.

Next, if the pressing rod 700 is repeatedly pressed up and down, while the extraction materials are being injected into the injection hole 380, the injected extraction materials are gently inserted into the juice squeezing drum 200. At this time, a relatively stronger force is applied when the pressing rod 700 pushes down, so that the injected extraction materials are more gently pushed into the juice squeezing drum 200.

The injected extraction materials are compressed and squeezed by the rotation of the juice squeezing screw 400, and the juice produced by removing the remnants from the squeezed materials is discharged through the juice discharging hole and provided for the user.

As shown in FIG.3, the up and down movement of the pressing rod 700 is accurately guided by means of the guide protrusions 366 and the guide grooves 760, and the formation of the guide protrusions 366 prevents the user's hand from being inserted through the insertion hole 362 when the pressing rod 700 is lost.

Next, an operation of the juice squeezing module according to the second embodiment of the present invention will be explained with reference to FIGS.5 to 7.

The coupling relation among the juice squeezing screw 400, the screen drum 500, the cap 300 and the juice squeezing drum 200 is the same as that in the first embodiment of the present invention as shown in FIG.3.

After the pressing rod 700 is fitted to the injection tube 360, the mounting member 600 is fitted to the injection tube 360 by means of the momentary elasticity of the fitting portion 620 and the coupling portion 650 when a slight force is applied horizontally to the injection tube 360. At this time, the pressing rod 700 somewhat moves up to prevent the mounting operation of the mounting member 600 from being interrupted by the handle 740. After the mounting, the coupled state of the mounting member 600 to the injection tube 360 is maintained by means of the elastic restoring forces of the fitting portion 620 and the coupling portion 650. If the mounting of the mounting member 600 is completed, as shown in FIG.6, the pressing rod 700 is inserted into the injection tube 360 in the state wherein the stepped projection 720 is locked onto the round projection 652, so that the pressing rod 700 is not separated from the injection tube 360 unless the mounting member 600 is removed from the injection tube 360.

Like this, if the coupling is completed, the magnetic material R is close to the sensor S, and the sensor S senses the magnetic force of the magnetic material R, so that the driving body 100 becomes in a state of being driven. Even if not shown, the protrusion and the micro switch may be formed on the positions corresponding to the positions where the magnetic material R and the sensor S are located. In this case, the protrusion presses the micro switch. Through the operation of the coupling sensing means, the signal is applied to allow the motor of the driving body 100 to become in the driven state, and the driving body 100 becomes activated. After that, the operational relation in the injection of the extraction materials and the juice squeezing operation is the same as that in the first embodiment of the present invention as shown in FIG.3.

According to the present invention, only in the state where the pressing rod 700, the mounting member 600 and the juice squeezing drum 200 are coupled to each other, the juice squeezing operation can be performed. Accordingly, there is no need to insert the extraction materials into the injection hole through the user's hand, and further, the extraction materials cannot be pressed by using any other objects except the pressing rod 700, thus preventing the juicer from being broken or malfunctioned.

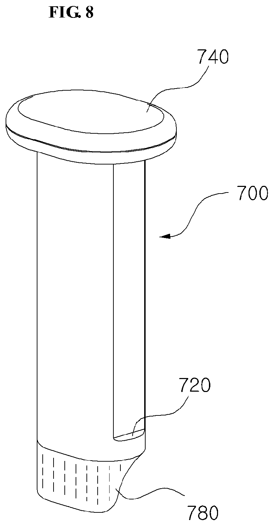

On the other hand, as shown in FIG.8, the pressing rod 700 has a cutter 780 formed thereon so as to cut long extraction materials to appropriate sizes when the extraction materials are injected. A blade corresponding to the cutter 780 may be formed on the inner peripheral surface of the injection hole 380.

If the extraction materials are injected at given intervals into the injection hole 380 through the up and down movement of the pressing rod 700, they are cut to given sizes and injected thereinto, so that the interruption in the injection of the extraction materials or the stacking of the extraction materials can be prevented.

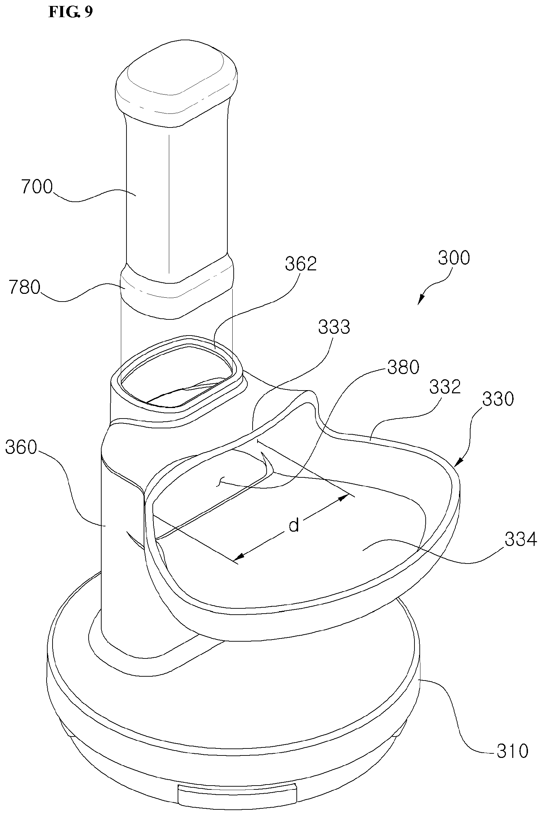

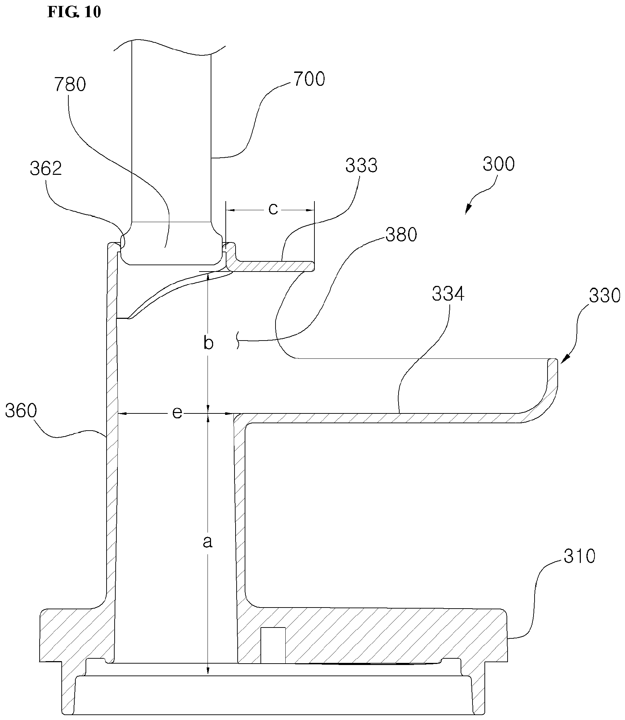

FIGS.9 and 10 show a cap and a pressing rod in a juice squeezing module for a juicer according to a third embodiment of the present invention, wherein the third embodiment of the present invention is almost the same as the first and second embodiments of the present invention, except that an injection hole is formed on the uppermost portion of an injection tube, which reliably prevents the occurrence of safety accidents.

According to the third embodiment of the present invention, a cap 300 includes a base 310 adapted to cover the top surface of a juice squeezing drum 200, an injection tube 360 protrudingly extended upward from the top portion of the base 310 and having a passage formed at the inside thereof in such a manner as to pass the base 310 therethrough, and an insertion hole 362 formed on the top end of the injection tube 360 to insert a pressing rod 700 thereinto. Further, the pressing rod 700 has a convex portion 780 formed on the lower end periphery thereof in such a manner as to be brought into contact with the inner periphery of the insertion hole 362, and when the pressing rod 700 is raised up to the uppermost portion of the injection tube 360 to cause the lower end periphery thereof to reach the insertion hole 362, the convex portion 780 is press-fitted to the insertion hole 362 and temporarily fixed in position thereto. The inside diameter of the injection tube 360 is larger than that of the insertion hole 362.

In this case, the injection hole 380, which is adapted to inject the extraction materials thereinto, is formed on the side surface of the injection tube 360 in such a manner as to communicate with the interior of the injection tube 360. The injection hole 380 is the hole into which the extraction materials are injected and is formed by opening a portion of the side surface of the injection tube 360. At this time, the distance a from the underside of the base 310 to the injection hole 380 is desirably an adult's finger length or more, and more desirably, 100 mm or more. Further, the height b of the injection hole 380 is desirably an adult's palm thickness or under, and more desirably, 45 mm or under. Also, the width d of the injection hole 380 is desirably in the range of 60 to 100 mm. Furthermore, the inside diameter e of the short axis of the injection tube 360 is 40 mm or under, so that when the user's hand is inserted into the injection tube 360 through the injection hole 380, the hand is not inserted deeply into the injection tube 360 because of the relatively narrow bent passage of the injection tube 360. In this case, a hopper 330 is disposed on a given area of the outer peripheral surface of the injection tube 360 in such a manner as to supportingly surround the injection hole 380. The formation of the hopper 330 prevents the extraction materials from dropping down when they are injected into the injection hole 380. The hopper 330 includes an external wall 332 adapted to surround the outer periphery of the injection hole 380, an upper external wall 333 protruding from the upper periphery of the injection hole 380 and a bottom surface 334 extended horizontally from the lower periphery of the injection hole 380 in such a manner as to be longer than the upper external wall 333. Desirably, the external wall 332 and the bottom surface 334 are formed unitarily with each other. Further, the bottom surface 334 is somewhat inclined downward toward the injection hole 380 so as to improve the injection efficiency of the extraction materials into the injection hole 380. In this case, the protruding length c of the upper external wall 333 from the outer periphery of the injection tube 360 is desirably in the range of 20 to 40 mm.

However, the width and height of the injection hole 380, the distance from the bottom surface of the base 310 to the injection hole 380, the protruding length of the upper external wall 333, and the inside diameter of the injection tube 360 may be freely determined only if the user's finger or wrist is bent when inserted into the injection hole 380 to prevent his or her finger end from reaching the bottom surface of the base 310.

On the other hand, the injection tube 360 has an insertion hole 362 formed on the top end periphery thereof, into which the pressing rod 700 is inserted, and the insertion hole 362 communicates with the internal passage of the injection tube 360.

Further, as shown in FIG.3, guide protrusions 366 are formed on the insertion hole 362 of the injection tube 360 so as to more accurately induce the up and down movement of the pressing rod 700 and to prevent the user's hand from being inserted into the injection tube 360. The guide protrusions 366 are formed on the inner peripheral surface of the insertion hole 362 of the injection tube 360, and desirably, they are formed on the inner peripheral surface of the entrance portion of the insertion hole 362. One or more guide protrusions 366 are formed on the inner peripheral surface of the insertion hole 362 of the injection tube 360, and in this case, the number of guide protrusions and the protruding heights and lengths may be appropriately adjusted to prevent the user's hand from being inserted deeply into the injection tube 360.

The pressing rod 700, which is inserted into the insertion hole 362, has guide grooves 760 formed vertically on the outer peripheral surface thereof to insert the guide protrusions 366 thereinto.

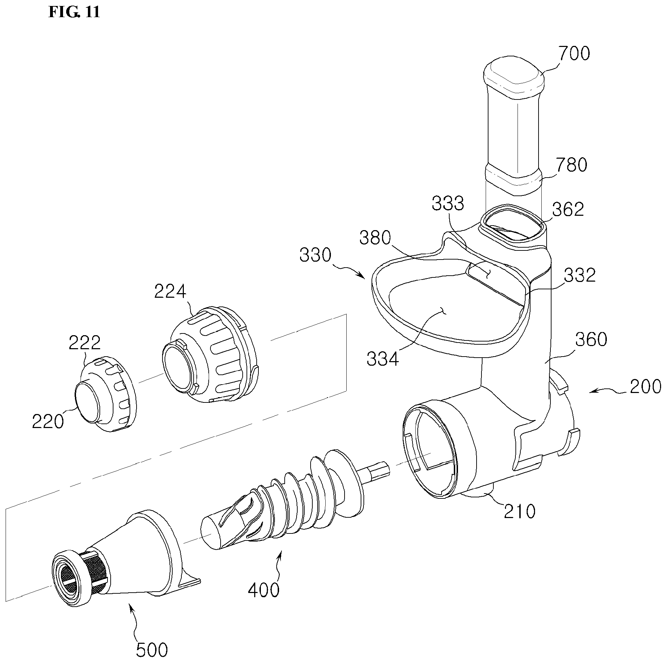

On the other hand, FIG.11 is an exploded perspective view showing a juice squeezing module for a juicer according to a fourth embodiment of the present invention, wherein the fourth embodiment of the present invention is almost the same as the above-mentioned embodiments of the present invention, except that the juicer is a horizontal type juicer. That is, FIG.11 shows the juice squeezing module for a horizontal type juicer having a juice squeezing screw coupled horizontally thereto, and the juice squeezing module includes a juice squeezing drum 200, a juice squeezing screw 400, and a screen drum 500.

The juice squeezing drum 200 has a shape of a cylinder having an internal space formed therein and includes a juice discharging hole 210 formed on the underside of one side thereof to discharge juice therefrom. Further, the juice squeezing drum 200 includes a juice squeezing drum cap 224 and an adjusting cap 222 coupled sequentially to one side thereof in such a manner as to have a through-hole formed thereon, and further includes a remnant discharging hole 220 formed on the juice squeezing drum cap 224.

The juice squeezing screw 400 is rotatably mounted horizontally at the inside of the juice squeezing drum 200 and has a plurality of screw spiral lines formed on the outer peripheral surface thereof to convey and crush extraction materials.

The screen drum 500 is mounted horizontally at the inside of the juice squeezing drum 200 and has a shape of a hollow cone to surround the outer periphery of the juice squeezing screw 400.

The extraction materials conveyed through the juice squeezing screw 400 are crushed and squeezed by the juice squeezing screw 400 and the screen drum 500 to produce juice therefrom, and the produced juice is discharged to the juice discharging hole 210, while the extracted materials are being discharged through the remnant discharging hole 220.

Further, an injection tube 360 has a shape of a generally oblong and is protrudingly extended upward from the top portion of one side of the juice squeezing drum 200 in such a manner as to communicate with the internal space of the juice squeezing drum 200.

In this case, an injection hole 380, which is adapted to inject the extraction materials thereinto, is formed on the side surface of the injection tube 360 in such a manner as to communicate with the interior of the injection tube 360. The injection hole 380 is the hole into which the extraction materials are injected and is formed by opening a portion of the side surface of the injection tube 360. At this time, the distance from the bottom surface of the injection tube 360 to the injection hole 380 is desirably an adult's finger length or more, and more desirably, 100 mm or more. Further, the open height of the injection hole 380 is desirably an adult's palm thickness or under, and more desirably, 45 mm or under. Also, the open rectangular width of the injection hole 380 is desirably in the range of 60 to 100 mm. Furthermore, the inside diameter of the short axis of the injection tube 360 is 40 mm or under, so that when the user's hand is inserted into the injection tube 360 through the injection hole 380, the hand is not inserted deeply into the injection tube 360 because of the relatively narrow bent passage of the injection tube 360. In this case, a hopper 330 is disposed on a given area of the outer peripheral surface of the injection tube 360 in such a manner as to supportingly surround the injection hole 380. The formation of the hopper 330 prevents the extraction materials from dropping down when they are injected into the injection hole 380. The hopper 330 includes an external wall 332 adapted to surround the outer periphery of the injection hole 380, an upper external wall 333 protrudingly extended from the upper periphery of the injection hole 380 and a bottom surface 334 extended horizontally from the lower periphery of the injection hole 380 in such a manner as to be longer than the upper external wall 333. Desirably, the external wall 332 and the bottom surface 334 are formed unitarily with each other. Further, the bottom surface 334 is somewhat inclined downward toward the injection hole 380 so as to improve the injection efficiency of the extraction materials into the injection hole 380. In this case, the protruding length of the upper external wall 333 from the outer periphery of the injection tube 360 is desirably in the range of 20 to 40 mm (See FIGS.9 and 10).

However, the width and height of the injection hole 380, the distance from the bottom surface of the injection tube 360 to the injection hole 380, the protruding length of the upper external wall 333, and the inside diameter of the injection tube 360 may be freely determined only if the user's finger or wrist is bent when inserted into the injection hole 380 to prevent his or her finger end from reaching the juice squeezing screw 400.

Further, the injection tube 360 has an insertion hole 362 formed on the top end periphery thereof, into which a pressing rod 700 is inserted. Furthermore, the pressing rod 700 has a convex portion 780 formed on the lower end periphery thereof in such a manner as to be brought into contact with the inner periphery of the insertion hole 362, and when the pressing rod 700 is raised up to the uppermost portion of the injection tube 360 to cause the lower end periphery thereof to reach the insertion hole 362, the convex portion 780 is press-fitted to the insertion hole 362 and temporarily fixed in position thereto. The inside diameter of the injection tube 360 is larger than that of the insertion hole 362.

As mentioned above, the juice squeezing module for the juicer according to the present invention has the injection hole formed on the side surface of the injection tube, thus preventing the user's hand from being inserted deeply into the juice squeezing drum and avoiding the occurrence of safety accidents.

Further, the sectional area of the injection hole can be large, while preventing the user's hand from being inserted deeply through the injection hole, thus removing the inconvenience that causes the extraction materials to cut to small pieces.

Additionally, the juice squeezing module can be operated only with the pressing rod, thus preventing the occurrence of accidents such as breakage or failure when the extraction materials are pushed by using any other tools except the pressing rod.

Moreover, the extraction materials can be cut to given sizes and injected into the injection hole, thus making it convenient in use.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A juice squeezing module for a juicer, comprising:
a juice squeezing drum (200) open on the top surface thereof and having a juice discharging hole (210) and a remnant discharging hole (210) formed on the lower end periphery thereof;
a juice squeezing screw (400) rotatably mounted at the inside of the juice squeezing drum (200) and having screw spiral lines formed on the outer peripheral surface thereof;
a screen drum (500) mounted at the inside of the juice squeezing drum (200) in such a manner as to surround the juice squeezing screw (400); and
a cap (300) adapted to cover the top surface of the juice squeezing drum (200) and having an injection tube (360) protrudingly extended upward from a portion of the top thereof, the injection tube having an injection hole (380) formed on the side surface thereof to inject extraction materials thereinto, **characterized in that**
the cap (300) further comprises a hopper (330) disposed on the side surface of the injection tube (360) in such a manner as to support the outer periphery of the injection hole (380), and the hopper (330) comprises an upper external wall (333) protruding laterally by a given length from the upper periphery of the injection hole (380), a bottom surface (334) extended horizontally from the lower periphery of the injection hole (380) in such a manner as to be longer than the upper external wall (333), and an external wall (332) protruding upwardly from an edge of the bottom surface (334) to connect the bottom surface (334) to the upper external wall (333), and
the bottom surface (334) is flat and plate-shaped.

2. The juice squeezing module for a juicer according to claim 1, wherein the bottom surface (334) of the hopper (330) is inclined downward toward the injection hole (380).

3. The juice squeezing module for a juicer according to claim 1, wherein the height (b) of the injection hole (380) is 45 mm or under, the width (d) of the injection hole (380) is in the range of 60 to 100 mm, and the inside diameter (e) of the short axis of the injection tube (360) is 40 mm or under.

4. The juice squeezing module for a juicer according to claim 1, wherein the cap (300) comprises a base (310) adapted to cover the top surface of the juice squeezing drum (200) and the injection tube (360) protrudingly extended upward from one side of the base (310), and the distance (a) from the underside of the base (310) to the bottom periphery of the injection hole (380) is 100 mm or more, while the protruding length (c) of the upper external wall (333) is being in the range of 20 to 40 mm.

5. The juice squeezing module for a juicer according to claim 1, further comprising a pressing rod (700) adapted to be inserted into an insertion hole (362) formed on the top portion of the injection tube (360) to press the extraction materials thereagainst through up and down movement.

6. The juice squeezing module for a juicer according to claim 5, wherein the injection tube (360) comprises guide protrusions (366) formed on the inner peripheral surface thereof.

7. The juice squeezing module for a juicer according to claim 5, further comprising a mounting member (600) open on the top and underside thereof and having a side opening (610) formed on one side thereof in such a manner as to cut vertically on at least a portion thereof and a fitting portion (620) formed on one side of the side opening (610) in such a manner as to be detachably coupled to the outer peripheral surface of the injection tube (360), whereby the escape of the pressing rod (700) is avoided by means of the mounting member (600), and the pressing rod (700) moves up and down in the injection tube (360) to press the injected extraction materials thereagainst.

8. The juice squeezing module for a juicer according to claim 7, further comprising escape prevention means for preventing the pressing rod (700) from being escaped from the mounting member (600).

9. The juice squeezing module for a juicer according to claim 8, wherein the escape prevention means comprises:
a coupling portion (650) formed on the upper portion of the mounting member (600) in such a manner as to be detachably coupled to the outer peripheral surface of the injection tube (360) and having a round projection (652) formed on the inner peripheral surface of the top end thereof; and
a stepped projection (720) formed on the outer peripheral surface of the pressing rod (700) in such a manner as to be locked onto the round projection (652).

10. The juice squeezing module for a juicer according to claim 7, wherein the juice squeezing drum (200) comprises coupling sensing means for sensing whether the juice squeezing drum (200) to which the mounting member (600) is coupled is mounted on a driving body (100) having driving force generating means providing a driving force to the juice squeezing screw (400) and a driving shaft connected to the driving force generating means to allow the driving force generating means to become in a state of being driven.

11. The juice squeezing module for a juicer according to claim 10, wherein the coupling sensing means comprises:
signal generating means (R) disposed on one side of the mounting member (600) to generate a signal; and
a sensor (S) disposed on the driving body (100) to sense the signal.

12. The juice squeezing module for a juicer according to claim 10, wherein the coupling sensing means comprises:
a protrusion formed on one side of the mounting member (600); and
a micro switch disposed on the driving body (100) in such a manner as to be operated by the protrusion.

13. The juice squeezing module for a juicer according to claim 5, wherein the pressing rod (700) has a cutter (780) formed on one side thereof to cut the injected extraction materials.

14. A juice squeezing module for a juicer, comprising:
a juice squeezing drum (200) having an internal space formed therein, a juice discharging hole (210) formed on one side of the lower portion thereof, an injection tube (360) formed on one side of the upper portion thereof in such a manner as to communicate with the internal space thereof, and a remnant discharging hole (220) formed on one side thereof;
a juice squeezing screw (400) rotatably mounted at the inside of the juice squeezing drum (200) and having screw spiral lines formed on the outer peripheral surface thereof; and
a screen drum (500) mounted at the inside of the juice squeezing drum (200) in such a manner as to surround the juice squeezing screw (400), **characterized in that**
the injection tube (360) comprises an injection hole (380) formed on the side surface thereof to inject extraction materials thereinto and a hopper (330) adapted to surround the injection hole (380), the hopper (330) having an upper external wall (333) protruding laterally by a given length from the upper periphery of the injection hole (380) and a bottom surface (334) extended horizontally from the lower periphery of the injection hole (380) in such a manner as to be longer than the upper external wall (333), and an external wall (332) protruding upwardly from an edge of the bottom surface (334) to connect the bottom surface (334) to the upper external wall (333), and
the bottom surface (334) is flat and plate-shaped.

## Patentansprüche

1. Saftpressmodul für eine Saftpresse, welches aufweist:
eine Saftpresstrommel (200), die an ihrer oberen Oberfläche offen ist und die ein Ausstoßöffnung (210) für Saft und ein Ausstoßöffnung (220) für Reste aufweist, die an ihrem unteren Endumfang ausgebildet worden sind,
eine Saftpressschraube (400), die drehbar an der Innenseite der Saftpresstrommel (200) angebracht ist und an deren äußeren Umfangsfläche Schneckenspirallinien ausgebildet sind,
eine Siebtrommel (500), die an der Innenseite der Saftpresstrommel (200) auf eine solche Weise angebracht ist, das sie die Saftpressschraube (400) umgibt, und
eine Kappe (300), die ausgebildet ist, um die obere Oberfläche der Saftpresstrommel (200) zu bedecken, und die ein Einspritzrohr (360) aufweist, das sich von einem Teil der Oberseite derselben nach oben erstreckt, wobei das Einspritzrohr ein Einspritzloch (380) aufweist, das an einer seitlichen Oberfläche davon ausgebildet ist, um Extraktionsmaterialien darin einzuspritzen, **dadurch gekennzeichnet, dass**
die Kappe (300) ferner einen Trichter (330) aufweist, der an der seitlichen Oberfläche des Einspritzrohrs (360) auf eine solche Weise angeordnet ist, dass er den äußeren Umfang des Einspritzlochs (380) stützt, und dass der Trichter (330) eine obere Außenwand (333) aufweist, die seitlich um eine gegebene Länge von dem oberen Umfang des Einspritzlochs (380) vorsteht, wobei sich eine untere Oberfläche (334) horizontal von dem unteren Umfang des Einspritzlochs (380) auf eine solche Weise erstreckt, dass sie länger als die obere Außenwand (333) und eine Außenwand (332) ist, die von einer Kante der unteren Oberfläche (334) nach oben vorsteht, um die untere Oberfläche (334) mit der oberen Außenwand (333) zu verbinden, und dass
die Bodenfläche (334) flach und plattenförmig ist.

2. Saftpressmodul für eine Saftpresse nach Anspruch 1, bei dem die untere Oberfläche (334) des Trichters (330) nach unten in Richtung auf das Einspritzloch (380) geneigt ist.

3. Saftpressmodul für eine Saftpresse nach Anspruch 1, bei dem die Höhe (b) des Einspritzlochs (380) 45 mm oder weniger beträgt und die Breite (d) des Einspritzlochs (380) in einem Bereich von liegt 60 bis 100 mm liegt und der Innendurchmesser (e) der kurzen Achse des Injektionsrohrs (360) 40 mm oder weniger beträgt.

4. Saftpressmodul für eine Saftpresse nach Anspruch 1, bei dem die Kappe (300) eine Basis (310) aufweist, die angepasst ist, um die obere Oberfläche der Saftpresstrommel (200) und das Einspritzrohr (360) zu bedecken, das sich nach oben von einer Seite der Basis (310) erstreckt, und bei dem der Abstand (a) von der Unterseite der Basis (310) zu dem unteren Umfang des Einspritzlochs (380) 100 mm oder beträgt mehr, während die vorstehende Länge (c) der oberen Außenwand (333) in einem Bereich von 20 bis 40 mm liegt.

5. Saftpressmodul für eine Saftpresse nach Anspruch 1, welches ferner einen Pressstab (700) aufweist, der zum Einsetzen in ein Einsteckloch (362) angepasst ist, das an dem oberen Abschnitt des Injektionsrohrs (360) ausgebildet worden ist, um die Extraktionsmaterialien dagegen durch eine Auf- und Abbewegung zu pressen.

6. Saftpressmodul für eine Saftpresse nach Anspruch 5, bei dem das Einspritzrohr (360) Führungsvorsprünge (366) aufweist, die an der inneren Umfangsfläche davon ausgebildet worden sind.

7. Saftpressmodul für eine Saftpresse nach Anspruch 5, welches ferner ein Montageelement (600) aufweist, das an der Ober- und Unterseite davon offen ist und das eine seitliche Öffnung (610), die an einer Seite davon auf eine solche Weise ausgebildet ist, dass er sie vertikal auf wenigstens einem Abschnitt davon schneidet, und einen Passabschnitt (620) aufweist, der auf einer Seite der seitlichen Öffnung (610) auf eine solche Weise ausgebildet ist, dass er lösbar mit der äußeren Umfangsfläche des Injektionsrohrs (360) gekoppelt ist, wodurch das Entweichen des Pressstabes (700) mittels des Montageelements (600) vermieden wird, und der Pressstab (700) sich in dem Einspritzrohr (360) auf und ab bewegt, um die eingespritzten Extraktionsmaterialien dagegen zu pressen.

8. Saftpressmodul für eine Saftpresse nach Anspruch 7, welches ferner ein Mittel zum Verhindern des Entweichens aufweist, um zu verhindern, dass der Pressstab (700) aus dem Montageelement (600) entweicht.

9. Saftpressmodul für eine Saftpresse nach Anspruch 8, bei dem das Mittel zum Verhindern des Entweichens aufweist:
einen Kopplungsabschnitt (650), der an dem oberen Abschnitt des Montageelements (600) auf eine solche Weise ausgebildet ist, dass er lösbar mit der äußeren Umfangsfläche des Injektionsrohrs (360) gekoppelt ist, und er einen runden Vorsprung (652) aufweist, der an der inneren Umfangsfläche des oberen Endes davon ausgebildet ist, und
einen abgestuften Vorsprung (720), der an der äußeren Umfangsfläche des Pressstabes (700) auf eine solche Weise ausgebildet ist, dass er an dem runden Vorsprung (652) verriegelt ist.

10. Saftpressmodul für eine Saftpresse nach Anspruch 7, bei dem die Saftpresstrommel (200) ein Kopplungserfassungsmittel aufweist, um zu erfassen, ob die Saftpresstrommel (200), an die das Montageelement (600) gekoppelt ist, an einem Antriebskörper (100) montiert ist, der ein Antriebskrafterzeugungsmittel, das der Saftpressschraube (400) eine Antriebskraft zuführt, und eine Antriebswelle aufweist, die mit dem Antriebskrafterzeugungsmittel verbunden ist, damit das Antriebskrafterzeugungsmittel in einen angetriebenen Zustand versetzt werden kann.

11. Saftpressmodul für eine Saftpresse nach Anspruch 10, bei dem das Kopplungserfassungsmittel aufweist:
ein Signalerzeugungsmittel (R), das auf einer Seite des Montageelements (600) angeordnet ist, um ein Signal zu erzeugen, und
einen Sensor (S), der an dem Antriebskörper (100) angeordnet ist, um das Signal zu erfassen.

12. Saftpressmodul für eine Saftpresse nach Anspruch 10, bei dem das Kopplungserfassungsmittel aufweist:
einen Vorsprung, der an einer Seite des Montageelements (600) ausgebildet worden ist, und
einen Mikroschalter, der an dem Antriebskörper (100) auf eine solche Weise angeordnet ist, dass er von dem Vorsprung betätigt wird.

13. Saftpressmodul für eine Saftpresse nach Anspruch 5, bei dem der Pressstab (700) eine Schneidvorrichtung (780) aufweist, die an einer Seite davon ausgebildet ist, um die eingespritzten Extraktionsmaterialien zu schneiden.

14. Saftpressmodul für eine Saftpresse, welches aufweist:
eine Saftpresstrommel (200), die einen darin ausgebildeten Innenraum, eine Ausstoßöffnung (210) für Saft, das an einer Seite des unteren Abschnitts davon ausgebildet ist, und ein Einspritzrohr (360), das an einer Seite des oberen Abschnitts davon auf eine solche Art und Weise ausgebildet ist, das sie mit dem Innenraum davon kommuniziert, und eine Ausstoßöffnung (220) für Reste aufweist, das an einer Seite davon ausgebildet ist,
eine Saftpressschraube (400), die drehbar an der Innenseite der Saftpresstrommel (200) angebracht ist und an deren äußeren Umfangsfläche Schneckenspirallinien ausgebildet sind, und
eine Siebtrommel (500), die an der Innenseite der Saftpresstrommel (200) auf eine solche Art und Weise angebracht ist, dass sie die Saftpressschraube (400) umgibt, **dadurch gekennzeichnet, dass**
das Einspritzrohr (360) ein Einspritzloch (380), das an seiner seitlichen Oberfläche ausgebildet ist, um Extraktionsmaterialien in dieses einzuspritzen, und einen Trichter (330) aufweist, der ausgebildet ist, um das Einspritzloch (380) zu umgeben, wobei der Trichter (330) eine obere Außenwand (333), die seitlich um eine gegebene Länge von dem oberen Umfang des Einspritzlochs (380) vorsteht, und eine untere Oberfläche (334), die sich horizontal vom dem unteren Umfang des Einspritzlochs (380) auf eine solche Weise erstreckt, dass sie länger als die obere Außenwand (333) ist, und eine Außenwand (332) aufweist, die von einer Kante der unteren Oberfläche (334) nach oben vorsteht, um die untere Oberfläche (334) mit der oberen Außenwand (333) zu verbinden, und dass
die Bodenfläche (334) flach und plattenförmig ist.

## Revendications

1. Module de pressage de jus pour un extracteur de jus, comprenant :
un tambour de pressage de jus (200) ouvert sur sa surface supérieure et ayant un trou d'évacuation de jus (210) et un trou d'évacuation de matières restantes (210) formés sur sa périphérie d'extrémité inférieure ;
une vis de pressage de jus (400) montée rotative au niveau de l'intérieur du tambour de pressage de jus (200) et ayant des lignes en spirale de vis formées sur sa surface périphérique externe ;
un tambour de tamis (500) monté au niveau de l'intérieur du tambour de pressage de jus (200) de manière à entourer la vis de pressage de jus (400) ; et
un capuchon (300) adapté à recouvrir la surface supérieure du tambour de pressage de jus (200) et ayant un tube d'injection (360) étendu de manière à faire saillie vers le haut à partir d'une partie de son sommet, le tube d'injection ayant un trou d'injection (380) formé sur sa surface latérale pour injecter des matériaux d'extraction dans celui-ci, **caractérisé en ce que**
le capuchon (300) comprend en outre une trémie (330) disposée sur la surface latérale du tube d'injection (360) de manière à supporter la périphérie externe du trou d'injection (380), et la trémie (330) comprend une paroi externe supérieure (333) faisant saillie latéralement sur une longueur donnée à partir de la périphérie supérieure du trou d'injection (380), une surface inférieure (334) étendue horizontalement à partir de la périphérie inférieure du trou d'injection (380) de manière à être plus longue que la paroi externe supérieure (333), et une paroi externe (332) faisant saillie vers le haut à partir d'un bord de la surface inférieure (334) pour raccorder la surface inférieure (334) à la paroi externe supérieure (333), et
la surface inférieure (334) est plate et en forme de plaque.

2. Module de pressage de jus pour un extracteur de jus selon la revendication 1, dans lequel la surface inférieure (334) de la trémie (330) est inclinée vers le bas en direction du trou d'injection (380).

3. Module de pressage de jus pour un extracteur de jus selon la revendication 1, dans lequel la hauteur (b) du trou d'injection (380) est de 45 mm ou moins, la largeur (d) du trou d'injection (380) est dans la plage de 60 à 100 mm, et le diamètre intérieur (e) de l'axe court du tube d'injection (360) est de 40 mm ou moins.

4. Module de pressage de jus pour un extracteur de jus selon la revendication 1, dans lequel le capuchon (300) comprend une base (310) adaptée à recouvrir la surface supérieure du tambour de pressage de jus (200) et du tube d'injection (360) étendu de manière à faire saillie à partir d'un côté de la base (310), et la distance (a) de la face inférieure de la base (310) à la périphérie inférieure du trou d'injection (380) est de 100 mm ou plus, alors que la longueur de saillie (c) de la paroi externe supérieure (333) est comprise dans la plage de 20 à 40 mm.

5. Module de pressage de jus pour un extracteur de jus selon la revendication 1, comprenant en outre une tige de pression (700) adaptée à être insérée dans un trou d'insertion (362) formé sur la partie supérieure du tube d'injection (360) pour presser les matériaux d'extraction contre celle-ci par le biais d'un mouvement vers le haut et vers le bas.

6. Module de pressage de jus pour un extracteur de jus selon la revendication 5, dans lequel le tube d'injection (360) comprend des saillies de guidage (366) formées sur sa surface périphérique interne.

7. Module de pressage de jus pour un extracteur de jus selon la revendication 5, comprenant en outre un élément de montage (600) ouvert sur son sommet et sa face inférieure et ayant une ouverture latérale (610) formée sur un côté de celui-ci de manière à couper verticalement sur au moins une partie de celui-ci et une partie d'ajustement (620) formée sur un côté de l'ouverture latérale (610) de manière à être accouplée de manière amovible à la surface périphérique externe du tube d'injection (360), moyennant quoi la sortie de la tige de pression (700) est évitée au moyen de l'élément de montage (600), et la tige de pression (700) se déplace vers le haut et vers le bas dans le tube d'injection (360) pour presser les matériaux d'extraction injectés contre celle-ci.

8. Module de pressage de jus pour un extracteur de jus selon la revendication 7, comprenant en outre des moyens de prévention de sortie pour empêcher la tige de pression (700) de sortir de l'élément de montage (600).

9. Module de pressage de jus pour un extracteur de jus selon la revendication 8, dans lequel les moyens de prévention de sortie comprennent :
une partie d'accouplement (650) formée sur la partie supérieure de l'élément de montage (600) de manière à être accouplée de manière amovible à la surface périphérique externe du tube d'injection (360) et ayant une saillie ronde (652) formée sur la surface périphérique interne de son extrémité supérieure ; et
une saillie étagée (720) formée sur la surface périphérique externe de la tige de pression (700) de manière à être verrouillée sur la saillie ronde (652).

10. Module de pressage de jus pour un extracteur de jus selon la revendication 7, dans lequel le tambour de pressage de jus (200) comprend des moyens de détection d'accouplement pour détecter si oui ou non le tambour de pressage de jus (200) auquel l'élément de montage (600) est accouplé est monté sur un corps d'entraînement (100) ayant des moyens de génération de force d'entraînement fournissant une force d'entraînement à la vis de pressage de jus (400) et un arbre d'entraînement raccordé aux moyens de génération de force d'entraînement pour permettre aux moyens de génération de force d'entraînement de passer dans un état entraîné.

11. Module de pressage de jus pour un extracteur de jus selon la revendication 10, dans lequel les moyens de détection d'accouplement comprennent :
des moyens de génération de signal (R) disposés sur un côté de l'élément de montage (600) pour générer un signal ; et
un capteur (S) disposé sur le corps d'entraînement (100) pour détecter le signal.

12. Module de pressage de jus pour un extracteur de jus selon la revendication 10, dans lequel les moyens de détection d'accouplement comprennent :
une saillie formée sur un côté de l'élément de montage (600) ; et
un micro-commutateur disposé sur le corps d'entraînement (100) de manière à être actionné par la saillie.

13. Module de pressage de jus pour un extracteur de jus selon la revendication 5, dans lequel la tige de pression (700) a un dispositif de coupe (780) formé sur un côté de celle-ci pour couper les matériaux d'extraction injectés.

14. Module de pressage de jus pour un extracteur de jus, comprenant :
un tambour de pressage de jus (200) ayant un espace interne formé en son sein, un trou d'évacuation de jus (210) formé sur un côté de sa partie inférieure, un tube d'injection (360) formé sur un côté de sa partie supérieure de manière à communiquer avec son espace interne, et un trou d'évacuation de matières restantes (220) formé sur un côté de celui-ci ;
une vis pressage de jus (400) montée rotative au niveau de l'intérieur du tambour de pressage de jus (200) et ayant des lignes en spirale de vis formées sur sa surface périphérique externe ; et
un tambour de tamis (500) monté au niveau de l'intérieur du tambour de pressage de jus (200) de manière à entourer la vis de pressage de jus (400), **caractérisé en ce que**
le tube d'injection (360) comprend un trou d'injection (380) formé sur sa surface latérale pour injecter des matériaux d'extraction dans celui-ci et une trémie (330) adaptée à entourer le trou d'injection (380), la trémie (330) présentant une paroi externe supérieure (333) faisant saillie latéralement sur une longueur donnée à partir de la périphérie supérieure du trou d'injection (380) et une surface inférieure (334) étendue horizontalement à partir de la périphérie inférieure du trou d'injection (380) de manière à être plus longue que la paroi externe supérieure (333), et une paroi externe (332) faisant saillie vers le haut à partir d'un bord de la surface inférieure (334) pour raccorder la surface inférieure (334) à la paroi externe supérieure (333), et
la surface inférieure (334) est plate et en forme de plaque.
